# EUROPÄISCHE PATENTSCHRIFT

(11) **EP 2 126 338 B1**
(45) Veröffentlichungstag und Bekanntmachung des Hinweises auf die Patenterteilung: **11.05.2011**
(21) Anmeldenummer: 08715960.4
(22) Anmeldetag: 22.02.2008
(51) Int. Cl.: F02N 11/08

(54) **VERFAHREN ZUR STEUERUNG EINES AUTOMATISCHEN ABSCHALTVORGANGS UND/ODER ANSCHALTVORGANGS EINER BRENNKRAFTMASCHINE IN EINEM KRAFTFAHRZEUG**
METHOD FOR CONTROLLING AN AUTOMATIC SHUT-DOWN PROCESS AND/OR START-UP PROCESS OF AN INTERNAL COMBUSTION ENGINE IN A MOTOR VEHICLE
PROCÉDÉ DE COMMANDE D'UN PROCESSUS AUTOMATIQUE DE COUPURE ET/OU DE MISE EN MARCHE D'UN MOTEUR À COMBUSTION INTERNE DANS UN VÉHICULE

(30) Priorität: 28.02.2007 DE 102007009870
(43) Veröffentlichungstag der Anmeldung: 02.12.2009
(73) Patentinhaber: Bayerische Motoren Werke Aktiengesellschaft, 80809 München (DE)
(72) Erfinder: ABENDROTH, Dirk, Dr., 80337 München (DE)
(86) Internationale Anmeldenummer: PCT/EP2008/001409
(87) Internationale Veröffentlichungsnummer: WO 2008/104329

(56) Entgegenhaltungen:
- EP-A- 1 059 442
- EP-A- 1 416 142
- EP-A- 1 553 289
- EP-A- 1 717 116
- WO-A-02/063163
- WO-A-2007/017323
- DE-A1- 10 038 280
- DE-A1- 19 720 009
- DE-C1- 10 211 461
- FR-A- 2 874 659
- JP-A- 2000 282 969
- JP-A- 2002 266 674
- JP-A- 2004 225 609
- US-A1- 2002 096 137
- US-A1- 2006 142 121
- DATABASE WPI Thomson Scientific, London, GB; AN DW200661 XP002487775 -& JP 2006 214358 A (MAZDA KK) 17. August 2006 (2006-08-17)

## Beschreibung

Die Erfindung bezieht sich auf ein Verfahren zur Steuerung eines automatischen Abschaltvorgangs und/oder eines automatischen Anschaltvorgangs einer Brennkraftmaschine in einem Kraftfahrzeug nach dem Oberbegriff des Anspruchs 1.

Um Kraftstoffverbrauch und Schadstoffemissionen zu reduzieren, werden derzeit Verfahren und Systeme entwickelt und zum Teil auch bereits eingesetzt, welche die Brennkraftmaschine eines Kraftfahrzeugs unter bestimmten Voraussetzungen bzw. bei Vorliegen vorgegebener Abschaltbedingungen automatisch abschalten und bei Vorliegen vorgegebener Anschaltbedingungen automatisch wieder anschalten. Derartige Verfahren und Systeme bzw. Start-Stopp-Einrichtungen sind vor allem für den Stadtverkehr zur Reduzierung des Kraftstoffverbrauchs geeignet, da im Stadtverkehr das Fahrzeug oft an Ampeln oder aufgrund des Verkehrs zum Stehen kommt und der Betrieb der Brennkraftmaschine nicht erforderlich ist.

So ist aus der DE 101 61 343 A1 eine automatische Stopp- und Anlasssteuervorrichtung für einen Verbrennungsmotor bekannt, wobei die Steuervorrichtung entsprechende Maßnahmen zum Abschalten des Verbrennungsmotors vornimmt, wenn alle genannten Abschaltbedingungen erfüllt sind. Beispielsweise muss die Geschwindigkeit des Fahrzeugs unter einem vorgegebenen Grenzwert liegen, bei Handschaltgetrieben darf kein Gang eingelegt sein und bei Automatikgetriebe-Fahrzeugen muss die Gangschaltstellung des Getriebes in Neutralstellung liegen.

Weiter offenbart die DE 100 30 290 A1 ebenfalls ein Verfahren und ein System zum automatischen Abschalten und Wiederanlassen eines Verbrennungsmotors. Hierbei wird ein automatisches Abschalten verhindert, wenn der Ladezustand der Batterie des Fahrzeugs unterhalb einer vorgegebenen Sperrschwelle liegt. Als weitere Abschaltbedingungen werden noch überprüft, ob die Geschwindigkeit des Fahrzeugs unter einem vorgegebenen Grenzwert liegt, ob sich das Getriebe im Leerlauf befindet und ob sich das Gaspedal in Ruheposition befindet.

Aus der DE 102 11 461 C1 ist ein Verfahren zum automatischen Abschalten und Anschalten einer Brennkraftmaschine bekannt, bei der eine Vielzahl von Einflussgrößen bei der Auswertung von Abschaltbedingungen und/oder Anschaltbedingungen berücksichtigt werden. So ist ein automatisches Abschalten der Brennkraftmaschine möglich wenn gleichzeitig folgende Abschaltbedingungen erfüllt sind:
- die Motorhaube muss geschlossen sein,
- das Geschwindigkeit des Kraftfahrzeugs ist kleiner als eine vorgegebene Geschwindigkeitsschwelle oder gleich Null,
- das Gaspedal ist nicht betätigt,
- das Bremselement ist betätigt,
- mindestens die Fahrertür ist geschlossen,
- im Falle eines Automatikgetriebes steht der Wählhebel auf einer Fahrstellung,
- die Temperatur der Abgasanlage hat ihren Betriebswert erreicht,
- der Verbrennungsmotor hat seine Betriebstemperatur erreicht,
- das Getriebe bzw. das Getriebeöl hat Betriebstemperatur erreicht und die Druckversorgung und damit die Schaltbarkeit des Getriebes sowie die Vermeidung einer Überhitzung im Getriebe ist auch bei ausgeschaltetem Motor sichergestellt,
- von der Klimasteuerung einer Klimatisiereinrichtung liegt eine Freigabe vor
- es liegt eine Freigabe durch eine Batterie- Kontrolleinrichtung vor,
- eine gegebenenfalls vorgesehene Verzögerungszeit vor dem Aktivieren des automatischen Abschaltvorgangs ist abgelaufen und
- ein Ein-Aus-Schalter zum manuellen Einschalten und Ausschalten der Start-Stopp-Einrichtung ist im Einschaltzustand.

Neben diesen bereits bekannten Abschaltbedingungen müssen jedoch noch andere Einflussgrößen berücksichtigt werden, damit eine derartige Start-Stopp-Einrichtung vom Fahrer akzeptiert wird und keine unplausiblen Zustände auftreten.

Aus der gattungsbildenden JP2004225609 A2 ist ein Start-Stopp-System bekannt, welches den Tankfüllstand berücksichtigt. Ist ein niedriger Füllstand erreicht, wird durch Veränderung der Abschaltbedingungen die Häufigkeit des Abschaltens des Motors erhöht.

Aufgabe der Erfindung ist es, ein verbessertes Verfahren zur Steuerung eines automatischen Abschaltvorgangs und/oder Anschaltvorgangs einer Brennkraftmaschine mittels einer Start-Stopp-Einrichtung anzugeben.

Diese Aufgabe wird durch ein Verfahren nach Patentanspruch 1. Vorteilhafte Weiterbildungen ergeben sich aus den abhängigen Ansprüchen.

Grundgedanke der Erfindung ist, dass neben den bekannten Einflussgrößen auf die Steuerung eines automatischen Abschalt- und/oder Anschaltvorgangs mittels einer Start-Stopp-Einrichtung noch eine Vielzahl weiterer Einflussgrößen berücksichtigt werden müssen, damit eine dem Kunden angebotene Start-Stopp-Einrichtung zum automatischen Abschalten und Anschalten der Brennkraftmaschine größtmögliche Akzeptanz findet und keine unplausiblen System- oder Fahrzeug-Zustände auftreten.

Erfindungsgemäß sollte neben oder alternativ zu den bekannten Einflussgrößen zumindest der aktuelle Tankfüllstand eines Kraftstofftanks derart ausgewertet werden, dass ein automatisches Abschalten der Brennkraftmaschine verhindert wird, wenn der Tankfüllstand eines Kraftstofftanks oder ein Mittel-oder Maximal- oder Minimalwert mehrerer Tankfüllstände kleiner als ein vorgegebener Tankfüllstandsgrenzwert ist. Diese Abschaltbedingung besteht somit darin, dass ein automatischer Abschaltvorgang nur durchgeführt werden kann, wenn der Tankfüllstand des Kraftstofftanks größer als der vorgegebene Tankfüllstandsgrenzwert ist.

Die Aufnahme dieser Einflussgröße in die Auswertung eine Abschaltbedingung ist deshalb wichtig, da bei einer automatisch abgeschalteten Brennkraftmaschine und einem sehr niedrigen Tankfüllstand ein Anschalten der Brennkraftmaschine u. U. nicht mehr möglich wäre. Eine automatisch abgeschaltete Brennkraftmaschine würde dann nicht mehr angeschaltet werden können und somit zu einem erheblichen Komfortmangel bei Fahrer führen. Vorteilhafterweise kann der Tankfüllstandsgrenzwert variabel, bspw. in Abhängigkeit von der aktuellen Neigung des Kraftfahrzeugs vorgegeben werden. Dies ist sinnvoll, da bei einer Neigung des Kraftfahrzeugs der Ansaugrüssel u. U. ins Leere saugt und ein Ansaugen von Kraftstoff nicht mehr möglich ist.

Vorteilhafterweise sollte neben dieser Einflussgröße zumindest eine weitere der folgenden Einflussgrößen in die Auswertung von Abschaltbedingungen und/oder Anschaltbedingungen berücksichtigt werden:
a) das Vorhandensein bzw. Nichtvorhandensein eines Fahreridentifikationsgebers und/oder eines Fahrzeugschlüssels, der ggf. als Funkfahrzeugschlüssel ausgestaltet sein kann,
b) der Zustand, in dem sich ein im Fahrzeug vorhandenes Tankentlüftungssystem, vorzugsweise ein Aktivkohlefilter befindet,
c) der Zustand, in dem sich ein im Fahrzeug vorhandener Dieselpartikelfilter befindet,
d) ein Aktivitätszustand eines Werkstatt- und/oder Werk- und/oder Service- und/oder Fertigungsmodus,
e) die aktuelle Umgebungstemperatur außerhalb des Fahrzeugs,
f) eine Auswertung einer Fahrersitzbelegungs- und ggf. einer Beifahrersitzbelegungserkennungseinrichtung, wobei die Sitzbelegungserkennungseinrichtung in Form einer Sitzbelegungsmatte und/oder eines Kamerasystems und/oder eines Gurtschloss-Auswertungssystems ausgestattet ist,
g) das Erkennen einer Zylindergleichstellung,
h) ein Aktivitätszustand eines Fahrgeschwindigkeitsregelsystems,
i) ein Aktivitätszustand einer sog. Autohold-Funktion bei Kraftfahrzeugen mit Automatikgetrieben,
j) ein Aktivitätszustand einer elektrischen Parkbremse und/oder
k) ein Aktivitätszustand einer sog. Hillhold-Funktion.

Vorteilhafterweise wird die unter a) beschriebene Einflussgröße derart ausgewertet, dass ein automatisches Abschalten und/oder Anschalten der Brennkraftmaschine verhindert wird, wenn kein gültiger Fahreridentifikations-Geber und/oder Fahrzeugschlüssel erkannt wird. Die Abschaltbedingung und/oder Anschaltbedingung besteht somit darin, dass ein automatischer Abschalt- und/oder Anschaltvorgang nur durchgeführt werden kann, wenn ein gültiger Fahreridentifikations-Geber und/oder Fahrzeugschlüssel erkannt wird. Ein gültiger Fahreridentifikations-Geber und/oder Fahrerschlüssel liegt dann vor, wenn der Fahreridentifikations-Geber derart erkannt wird, dass ein Anschalten der Brennkraftmaschine wieder möglich wäre. Dies wäre beispielsweise nicht der Fall wenn der Fahreridentifikations-Geber, der nicht unbedingt an einer bestimmten Stelle im Fahrzeug sein muss, während der Fahrt bspw. aus dem Fenster fallen würde oder dieser defekt wäre und somit kein gültiges Signal an das Fahrzeug senden könnte. Kein Fahrzeugschlüssel könnte bspw. dann erkannt werden, wenn die Einschubvorrichtung, in welcher der Fahrzeugschlüssel zumindest beim Starten der Brennkraftmaschine eingeschoben sein muss, derart defekt ist, dass diese den eingeschobenen Fahrzeugschlüssel nicht erkennt oder der Fahrzeugschlüssel nicht in der vorgesehenen Einschubvorrichtung eingeschoben ist.

Die Aufnahme dieser Einflussgröße in die Auswertung eine Abschaltbedingung ist deshalb wichtig, da zwar ein Fahren ohne Schlüssel unter bestimmten Voraussetzungen möglich sein kann, ein Anschalten der Brennkraftmaschine jedoch nicht. Eine automatisch abgeschaltete Brennkraftmaschine würde dann nicht mehr angeschaltet werden können - es würde zu einem sog. ,,Liegenbteiber" kommen. Dies würde somit zu einem erheblichen Komfortmangel der Start-Stopp-Einrichtung bei Fahrer führen.

In einer vorteilhaften Ausgestaltung der Erfindung kann auch die Start-Stopp-Einrichtung vollständig deaktiviert werden, wenn nach anfänglich erkanntem gütigen Fahreridentifikations-Geber und/oder Fahrerschlüssel später kein gültiger Fahreridentifikations-Geber und/oder Fahrzeugschlüssel mehr erkannt wird.

Vorteilhafterweise wird die unter b) beschriebene Einflussgröße derart ausgewertet, dass ein automatisches Abschalten und/oder Anschalten der Brennkraftmaschine verhindert wird, wenn sich ein im Fahrzeug vorhandenes Tankentlüftungssystem im Sättigungsbereich befindet. Handelt es sich bei dem Tankentlüftungssystem um einen Aktivkohlefilter, muss ein automatisches Abschalten und/oder Anschalten der Brennkraftmaschine verhindert werden, wenn die Beladung des Aktivkohlefilters größer als ein vorgegebener Beladungsgrenzwert ist. Die Abschaltbedingung und/oder Anschaltbedingung besteht somit darin, dass ein automatischer Abschalt- und/oder Anschaltvorgang nur durchgeführt werden kann, wenn die Beladung des Aktivkohlefilters kleiner ist als der vorgegebene Beladungsgrenzwert (inkl. Hysteresen etc.).

Die Aufnahme dieser Einflussgröße in die Auswertung eine Abschaltbedingung ist deshalb wichtig, da es ansonsten durch das automatische Abschalten der Brennkraftmaschine zu einem Durchschlagen des Aktivkohlfilters kommen könnte und damit der Aktivkohlfilter in seiner Funktionsweise unwirksam werden könnte. Dadurch könnten ungewollt vermehrt Schadstoffe entweichen oder Geruchsbelästigung in der Fahrgastzelle entstehen.

Vorteilhafterweise wird die unter c) beschriebene Einflussgröße derart ausgewertet, dass ein automatisches Abschalten der Brennkraftmaschine verhindert wird, wenn sich ein im Fahrzeug vorhandener Dieselpartikelfilter in einer Regenerierungsphase befindet. Diese Abschaltbedingung besteht somit darin, dass ein automatischer Abschaltvorgang nur durchgeführt werden kann, wenn der sich der Dieselpartikelfilter nicht einer Regenerierungsphase befindet.

Die Aufnahme dieser Einflussgröße in die Auswertung eine Abschaltbedingung ist deshalb wichtig, da es ansonsten durch das automatische Abschalten und/oder Anschalten der Brennkraftmaschine zu einer Beschädigung des Dieselpartikelfilters kommen könnte oder der Dieselpartikelfilter in seiner Funktionsweise unwirksam werden könnte. Dadurch könnten vermehrt Schadstoffe ausgestoßen werden.

Vorteilhafterweise wird die unter d) beschriebene Einflussgröße derart ausgewertet, dass ein automatisches Abschalten und/oder Anschalten der Brennkraftmaschine verhindert wird, wenn im Kraftfahrzeug ein Werkstatt-und/oder Werk- und/oder Service- und/oder Fertigungsmodus aktiv geschaltet ist. Diese Abschaltbedingung besteht somit darin, dass ein automatischer Abschaltvorgang und/oder Anschaltvorgang nur durchgeführt werden kann, wenn kein aktiver Werkstatt- und/oder Werk- und/oder Service- und/oder Fertigungsmodus erkannt wird.

Die Aufnahme dieser Einflussgröße in die Auswertung eine Abschaltbedingung ist deshalb wichtig, da ein derartiger Modus in der Regel nur dann aktiv ist, wenn das Kraftfahrzeug nicht vollständig funktionsfähig ist. Würde trotzdem ein automatischer Anschalt- und/oder Abschaltvorgang vorgenommen werden, könnte dies zu einer (weiteren) Schädigung eines Systems im Kraftfahrzeug führen, Mitarbeiter, Werks- oder Service-Personal gefährden oder die Produktionszeiten verlängern.

In einer vorteilhaften Ausgestaltung der Erfindung kann auch die Start-Stopp-Einrichtung vollständig deaktiviert werden, wenn erkannt wird, dass ein Werkstatt- und/oder Werk- und/oder Service- und/oder Fertigungsmodus aktiv ist. Dadurch können Werks-, Service- und Produktionsabläufe beschleunigt werden oder sicherer gestaltet werden.

Vorteilhafterweise wird die unter e) beschriebene Einflussgröße derart ausgewertet, dass ein automatisches Abschalten und/oder Anschalten der Brennkraftmaschine verhindert wird, wenn sich die Umgebungstemperatur nicht innerhalb eines vorgegebenen Temperaturfensters befindet. Diese Abschaltbedingung besteht somit darin, dass ein automatischer Abschaltvorgang und/oder Anschaltvorgang nur durchgeführt werden kann, wenn die aktuelle Umgebungstemperatur außerhalb des Kraftfahrzeugs größer als ein vorgegebener unterer Temperaturgrenzwert und gleichzeitig kleiner als ein vorgegebener oberer Temperaturgrenzwert ist.

Die Aufnahme dieser Einflussgröße in die Auswertung eine Abschaltbedingung ist deshalb wichtig, da es ansonsten zu einem unerwarteten bzw. unplausiblen Abschalt- und/oder Anschaltverhalten der Brennkraftmaschine oder zu einer Schädigung verschiedener Fahrzeugsysteme kommen könnte. Vorteilhafterweise kann der untere Temperaturgrenzwert mit einem Temperaturgrenzwert identisch sein, der im Fahrzeug bereits abgefragt wird und bei dessen Unterschreitung ohnehin ein Warnsignal ausgegeben wird.

Vorteilhafterweise wird die unter f) beschriebene Einflussgröße derart ausgewertet, dass ein automatisches Abschalten und/oder Anschalten der Brennkraftmaschine verhindert wird, wenn die Auswertung einer Fahrersitzbelegungserkennungseinrichtung und ggf. einer Beifahrersitzbelegungserkennung keine Sitzbelegung erkennen lässt. Diese Abschaltbedingung besteht somit darin, dass ein automatischer Abschaltvorgang und/oder Anschaltvorgang nur durchgeführt werden kann, wenn die Auswertung der Fahrersitzbelegungserkennungseinrichtung ergibt, dass der Fahrersitz mit einer Person besetzt ist.

Eine Sitzbelegung kann mit verschiedenen Systemen oder Kombinationen von Systemen erkannt werden. Eine Sitzbelegung kann beispielsweise mittels einer Sitzbelegungsmatte oder/und mit einem Kamerasystem erkannt werden. Zusätzlich oder Alternativ kann auch der Zustand eines Gurtschlosses ausgewertet werden. Zusätzlich kann auch noch ermittelt werden, ob die Fahrertür und/oder die Beifahrertür offen oder geschlossen ist. Die Beifahrertür kann bspw. dann eine Rolle spielen, wenn der Fahrer wegen Platzmangel das Fahrzeug nicht auf der Fahrerseite verlassen kann, sondern nur über die Beifahrertür.

Die Aufnahme dieser Einflussgröße, also die Auswertung der Sitzbelegungserkennungseinrichtung in Form einer Sitzbelegungsmatte und/oder einer Innenraumkamera und/oder einer Gurtschloss-Auswerteeinheit in die Auswertung eine Abschaltbedingung ist deshalb wichtig, da ein automatischer Abschalt- und/oder Anschaltvorgang ohne das Vorhandensein eines Fahrers zu einer Gefahr führen könnte - bspw. dann, wenn die Brennkraftmaschine wieder gestartet wird, wenn der Fahrer zwischenzeitlich das Fahrzeug verlassen hat.

Vorteilhafterweise wird die unter g) beschriebene Einflussgröße derart ausgewertet, dass ein automatisches Abschalten der Brennkraftmaschine verhindert wird, wenn eine Zylindergleichstellung erkannt wird. Diese Abschaltbedingung besteht somit darin, dass ein automatischer Abschaltvorgang nur durchgeführt werden kann, wenn keine Zylindergleichstellung vorliegt bzw. erkannt wird.

Die Aufnahme dieser Einflussgröße in die Auswertung eine Abschaltbedingung ist deshalb wichtig, da es ansonsten vorkommen kann, dass die Abschaltung gerade im Zeitpunkt der Zylindergleichstellungsadaption durchgeführt wird. In diesem Fall entsteht ein Stoppverhalten unter erheblichen Komforteinbußen und eine schlechtere Ausgangsposition für den nächsten automatischen Start (Startkomforteinbuße).

Vorteilhaftenrveise wird die unter h) beschriebene Einflussgröße derart ausgewertet, dass ein automatisches Abschalten und/oder Anschalten der Brennkraftmaschine verhindert wird, wenn gleichzeitig ein Geschwindigkeitsregelsystem, vorzugsweise ein kombiniertes Abstands- und Geschwindigkeitsregelsystem aktiv ist. Die Abschaltbedingung und/oder Anschaltbedingung besteht somit darin, dass ein automatischer Abschalt- und/oder Anschaltvorgang nur durchgeführt werden kann, wenn keine aktive Fahrgeschwindigkeitsregelung erkannt wird.

Die Aufnahme dieser Einflussgröße in die Auswertung eine Abschaltbedingung ist deshalb wichtig, da das Kraftfahrzeug im Geschwindigkeitsregelbetrieb u. U. eine Geschwindigkeit erreichen könnte, die als Stillstand erkannt wird, und die Brennkraftmaschine dann ungewollt abgeschaltet wird. Dies könnte bspw. der Fall sein, wenn bei langsamer Regelgeschwindigkeit plötzlich eine starke Steigung zu befahren ist. Die Geschwindigkeit des Fahrzeugs könnte dann kurzfristig aufgrund einer begrenzten Momentenreserve und einer Regelverzögerung nahezu Null werden.

Vorteilhafterweise wird die unter i) beschriebene Einflussgröße derart ausgewertet, dass ein automatisches Anschalten der Brennkraftmaschine verhindert wird, wenn bei einer aktiven sog. "Autohold-Funktion" das Bremspedal gelöst wird solange nicht das Gaspedal getreten wird. Die Anschaltbedingung besteht somit darin, dass ein automatischer Anschaltvorgang bei einem Kraftfahrzeug mit Automatikgetriebe und aktiver "Autohold-Funktion nur durchgeführt wird, wenn das Gaspedal soweit durchgetreten ist, dass die Gaspedalstellung aus ihrer Grundposition um mehr als einen vorgegebenen Gaspedalstellungsschwellwert abweicht.

Die Aufnahme dieser Einflussgröße in die Auswertung eine Anschaltbedingung ist deshalb wichtig, da ansonsten die Brennkraftmaschine schon immer gestartet werden würde, wenn die sog. Autohold-Funktion noch eingreifen könnte (unter der Voraussetzung dass eine herkömmliche Anschaltbedingung bei Kraftfahrzeugen mit Automatikgetrieben das Lösen einer Bremse ist). Die Autohold-Funktion könnte damit im Verbund mit der Auto-Start-Stopp-Funktion nicht angewendet werden.

Vorteilhafterweise besteht bei einem Kraftfahrzeug mit einem Automatikgetriebe, eine Anschaltbedingung zum automatischen Anschalten der Brennkraftmaschine in einem Kraftfahrzeug darin, dass ein automatisches Anschalten der Brennkraftmaschine nur möglich ist, wenn beim Lösen der Bremse keine Autohold-Funktion aktiv ist.

Entsprechend der unter i) beschriebenen Einflussgröße wird vorteilhafterweise die unter j) beschriebene Einflussgröße derart ausgewertet, dass ein automatisches Anschalten der Brennkraftmaschine verhindert wird, wenn eine im Fahrzeug vorhandene elektrische Parkbremse aktiv ist. Die Anschaltbedingung besteht somit darin, dass ein automatischer Anschaltvorgang bei einem Kraftfahrzeug mit einer elektrischen Parkbremse nur durchgeführt werden kann, wenn die elektrische Parkbremse nicht aktiv ist.

Die Aufnahme dieser Einflussgröße in die Auswertung eine Abschaltbedingung und/oder Anschaltbedingung ist deshalb wichtig, da ansonsten die Funktion der elektrischen Parkbremse sinnlos werden würde, wenn die Brennkraftmaschine schon gestartet werden würde, wenn die elektrische Parkbremse noch eingreifen könnte.

Entsprechend der unter i) und j) beschriebenen Einflussgröße wird vorteilhafterweise die unter k) beschriebene Einflussgröße derart ausgewertet, dass ein automatisches Anschalten der Brennkraftmaschine verhindert wird, wenn bei einer im Fahrzeug vorhandenen und aktiven sog. Hillhold-Funktion nicht das Gaspedal getreten wird. Die Anschaltbedingung besteht somit darin, dass ein automatischer Anschaltvorgang bei einem Kraftfahrzeug einer Hillhold-Funktion nur durchgeführt wird, wenn bei aktiver Hillhold-Funktion das Gaspedal soweit durchgetreten ist, dass die Gaspedalstellung aus ihrer Grundposition um mehr als einen vorgegebenen Gaspedalstellungsschwellwert abweicht. Eine alternative Ausgestaltung der Anschaltbedingung besteht darin, dass ein automatischer Anschaltvorgang bei einem Kraftfahrzeug mit einer sog. Hillhold-Funktion nur durchgeführt werden kann, wenn die Hillhold-Funktion nicht aktiv ist.

Die Aufnahme dieser Einflussgröße in die Auswertung eine Anschaltbedingung ist deshalb wichtig, da ansonsten die sog. Hillhold-Funktion sinnlos werden würde, wenn die Brennkraftmaschine schon gestartet werden würde, wenn die sog. Hillhold-Funktion noch eingreifen könnte.

Durch die Auswertung dieser genannten Einflussgrößen im Rahmen von Abschaltbedingungen und/oder Anschaltbedingungen wird das die automatischen Abschalt- und Anschaltvorgänge ausführende System wesentlich transparenter und führt zu weniger unplausiblen Fahrzeugzuständen. Zusätzlich wird die Wechselwirkung zu anderen Fahrregelsystemen aufgelöst.

## Patentansprüche

1. Verfahren zur Steuerung eines automatischen Abschaltvorgangs und/oder Anschaltvorgangs einer Brennkraftmaschine in einem Kraftfahrzeug mittels einer Start-Stopp-Einrichtung, durch welche nach dem Anlassen der Brennkraftmaschine durch eine Person und einem Fahren des Kraftfahrzeugs beim Anhalten des Kraftfahrzeugs die Brennkraftmaschine automatisch abgeschaltet wird, wenn vorgegebene Abschaltbedingungen durch entsprechende Einflussgrößen erfüllt sind, und/oder durch welche eine automatisch abgeschaltete Brennkraftmaschine automatisch angeschaltet wird, wenn vorgegebene Anschaltbedingungen durch entsprechende Einflussgrößen erfüllt sind, wobei für eine Auswertung von Abschaltbedingungen und/oder Anschaltbedingungen als eine Einflussgröße der aktuelle Tankfüllstand eines Kraftstofftanks berücksichtigt wird, **dadurch gekennzeichnet, dass** eine Abschaltbedingung zum automatischen Abschalten der Brennkraftmaschine darin besteht, dass ein automatisches Abschalten der Brennkraftmaschine nur möglich ist, wenn der Tankfüllstand eines Kraftstofftanks oder ein Mittel- oder Maximal- oder Minimalwert mehrerer Tankfüllstände größer als ein vorgegebener Tankfüllstandgrenzwert ist.

2. Verfahren nach Anspruch 1, **dadurch gekennzeichnet, dass** für eine Auswertung von Abschaltbedingungen und/oder Anschaltbedingungen zumindest eine weitere der folgenden Einflussgrößen berücksichtigt wird:
a) das Vorhandensein bzw. Nichtvorhandensein eines Fahreridentifikationsgebers und/oder eines Fahrzeugschlüssels, der ggf. als Funkfahrzeugschlüssel ausgestaltet sein kann,
b) der Zustand, in dem sich ein im Fahrzeug vorhandenes Tankentlüftungssystem, vorzugsweise ein Aktivkohlefilter befindet,
c) der Zustand, in dem sich ein im Fahrzeug vorhandener Dieselpartikelfilter befindet,
d) ein Aktivitätszustand eines Werkstatt- und/oder Werk- und/oder Service- und/oder Fertigungsmodus,
e) die aktuelle Umgebungstemperatur außerhalb des Fahrzeugs,
f) eine Auswertung einer Fahrersitzbelegungs- und ggf. einer Beifahrersitzbelegungserkennungseinrichtung, wobei die Sitzbelegungserkennungseinrichtung in Form einer Sitzbelegungsmatte und/oder eines Kamerasystems und/oder eines Gurtschloss-Auswertungssystems ausgestattet ist,
g) das Erkennen einer Zylindergleichstellung,
h) ein Aktivitätszustand eines Fahrgeschwindigkeitsregelsystems,
i) ein Aktivitätszustand einer sog. Autohold-Funktion bei Kraftfahrzeugen mit Automatikgetrieben,
j) ein Aktivitätszustand einer elektrischen Parkbremse und/oder
k) ein Aktivitätszustand einer sog. Hillhold-Funktion.

3. Verfahren nach Anspruch 2, **dadurch gekennzeichnet, dass** eine weitere Abschaltbedingung zum automatischen Abschalten der Brennkraftmaschine und/oder eine Anschaltbedingung zum automatischen Anschalten der Brennkraftmaschine darin besteht, dass ein automatisches Abschalten und/oder Anschalten der Brennkraftmaschine nur möglich ist, wenn aktuell ein gültiger Fahreridentifikations-Geber und/oder Fahrzeugschlüssel erkannt wird.

4. Verfahren nach einem der Ansprüche 2 -3, **dadurch gekennzeichnet, dass** bei Nichterkennen eines gültigen gültiger Fahreridentifikations-Geber und/oder Fahrzeugschlüssel die Start-Stopp-Einrichtung zum automatischen Abschalten und/oder Anschalten der Brennkraftmaschine deaktiviert wird.

5. Verfahren nach einem der Ansprüche 2 -4, **dadurch gekennzeichnet, dass** eine weitere Abschaltbedingung zum automatischen Abschalten der Brennkraftmaschine und/oder eine Anschaltbedingung zum automatischen Anschalten der Brennkraftmaschine darin besteht, dass ein automatisches Abschalten und/oder Anschalten der Brennkraftmaschine nur möglich ist, wenn sich ein im Fahrzeug vorhandenes Tankentlüftungssystem im Sättigungsbereich befindet.

6. Verfahren nach einem der Ansprüche 2 -4, **dadurch gekennzeichnet, dass** eine weitere Abschaltbedingung zum automatischen Abschalten der Brennkraftmaschine und/oder eine Anschaltbedingung zum automatischen Anschalten der Brennkraftmaschine darin besteht, dass ein automatisches Abschalten und/oder Anschalten der Brennkraftmaschine nur möglich ist, wenn die Beladung eines Aktivkohlefilters kleiner als ein vorgegebener Beladungsgrenzwert ist.

7. Verfahren nach einem der Ansprüche 2 -6, **dadurch gekennzeichnet, dass** eine weitere Abschaltbedingung zum automatischen Abschalten der Brennkraftmaschine darin besteht, dass ein automatisches Abschalten der Brennkraftmaschine nur möglich ist, wenn sich der Dieselpartikelfilter nicht in einer Regenerierungsphase befindet, oder eine Dieselfilterbeladung einen vorgegebenen Grenzwert überschreitet.

8. Verfahren nach einem der Ansprüche 2-7, **dadurch gekennzeichnet, dass** eine weitere Abschaltbedingung zum automatischen Abschalten der Brennkraftmaschine und/oder eine Anschaltbedingung zum automatischen Anschalten der Brennkraftmaschine darin besteht, dass ein automatisches Abschalten und/oder Anschalten der Brennkraftmaschine nur möglich ist, wenn kein aktiver Werkstatt-und/oder Werk- und/oder Service- und/oder Fertigungsmodus erkannt wird.

9. Verfahren nach einem der Ansprüche 2-8, **dadurch gekennzeichnet, dass** bei aktivem Werkstatt- und/oder Werk- und/oder Service-und/oder Fertigungsmodus die Start-Stopp-Einrichtung zum automatischen Abschalten und/oder Anschalten der Brennkraftmaschine deaktiviert wird.

10. Verfahren nach einem der Ansprüche 2-9, **dadurch gekennzeichnet, dass** eine weitere Abschaltbedingung zum automatischen Abschalten der Brennkraftmaschine und/oder eine Anschaltbedingung zum automatischen Anschalten der Brennkraftmaschine darin besteht, dass ein automatisches Abschalten und/oder Anschalten der Brennkraftmaschine nur möglich ist, wenn die aktuelle Umgebungstemperatur größer als ein unterer Temperaturgrenzwert und kleiner als ein oberer Temperaturgrenzwert ist.

11. Verfahren nach einem der Ansprüche 2-10, **dadurch gekennzeichnet, dass** eine weitere Abschaltbedingung zum automatischen Abschalten der Brennkraftmaschine und/oder eine Anschaltbedingung zum automatischen Anschalten der Brennkraftmaschine darin besteht, dass ein automatisches Abschalten und/oder Anschalten der Brennkraftmaschine nur möglich ist, wenn die Fahrersitzbelegungserkennungseinheit einen belegten Sitz erkennt.

12. Verfahren nach Anspruch 11, **dadurch gekennzeichnet, dass** im Rahmen der Sitzbelegungserkennung zusätzlich der Schließzustand der Fahrertür oder/ und der Beifahrertür des Kraftfahrzeugs ausgewertet wird.

13. Verfahren nach einem der Ansprüche 2-12, **dadurch gekennzeichnet, dass** eine weitere Abschaltbedingung zum automatischen Abschalten der Brennkraftmaschine darin besteht, dass ein automatisches Abschalten der Brennkraftmaschine nur möglich ist, wenn keine Zylindergleichstellung erkannt wird.

14. Verfahren nach einem der Ansprüche 2-13, **dadurch gekennzeichnet, dass** eine weitere Abschaltbedingung zum automatischen Abschalten der Brennkraftmaschine und/oder eine Anschaltbedingung zum automatischen Anschalten der Brennkraftmaschine darin besteht, dass ein automatisches Abschalten und/oder Anschalten der Brennkraftmaschine nur möglich ist, wenn keine aktive Fahrgeschwindigkeitsregelfunktion erkannt wird.

15. Verfahren nach einem der Ansprüche 2-14, **dadurch gekennzeichnet, dass** eine Anschaltbedingung zum automatischen Anschalten der Brennkraftmaschine darin besteht, dass ein automatisches Anschalten der Brennkraftmaschine nur möglich ist, wenn bei erkannter aktiver Autohold-Funktion das Gaspedal so weit durchgetreten ist, dass die Gaspedalstellung aus ihrer Grundlage um mehr als einen vorgegebenen Gaspedalstellungsschwellwert abweicht.

16. Verfahren nach einem der Ansprüche 2-15, **dadurch gekennzeichnet, dass** eine Anschaltbedingung zum automatischen Anschalten der Brennkraftmaschine in einem Kraftfahrzeug mit Automatikgetrieben darin besteht, dass ein automatisches Anschalten der Brennkraftmaschine nur möglich ist, wenn beim Lösen der Bremse keine Autohold-Funktion aktiv ist.

17. Verfahren nach einem der Ansprüche 2-16, **dadurch gekennzeichnet, dass** eine Anschaltbedingung zum automatischen Anschalten der Brennkraftmaschine darin besteht, dass ein automatisches Anschalten der Brennkraftmaschine nur möglich ist, wenn bei erkannter aktiver elektrischer Parkbremse das Gaspedal so weit durchgetreten ist, dass die Gaspedalstellung aus ihrer Grundlage um mehr als einen vorgegebenen Gaspedalstellungsschwellwert abweicht.

18. Verfahren nach einem der Ansprüche 2-17, **dadurch gekennzeichnet, dass** eine Anschaltbedingung zum automatischen Anschalten der Brennkraftmaschine darin besteht, dass ein automatisches Anschalten der Brennkraftmaschine nur möglich ist, wenn keine aktive Hillhold-Funktion erkannt wird.

19. Verfahren nach einem der Ansprüche 2-18, **dadurch gekennzeichnet, dass** eine Anschaltbedingung zum automatischen Anschalten der Brennkraftmaschine darin besteht, dass ein automatisches Anschalten der Brennkraftmaschine nur möglich ist, wenn bei erkannter aktiver Hillhold-Funktion das Gaspedal so weit durchgetreten ist, dass die Gaspedalstellung aus ihrer Grundlage um mehr als einen vorgegebenen Gaspedalstellungsschwellwert abweicht.

## Claims

1. A method for controlling an automatic shut-down process and/or start-up process of an internal combustion engine in a motor vehicle by means of a start-stop device, by means of which, after a person has started up the internal combustion engine and the motor vehicle has been driven, when the vehicle is stopped, the internal combustion engine is automatically shut down when predetermined shut-down conditions are fulfilled by corresponding influencing variables, and/or by means of which an automatically shut-down internal combustion engine is automatically started up when predetermined start-up conditions are fulfilled by corresponding influencing variables, wherein the current fill level of a fuel tank is taken into account for an evaluation of shut-down conditions and/or start-up conditions, as an influencing variable, **characterised in that** a shut-down condition for automatically shutting down the internal combustion engine is that it is only possible to automatically shut down the internal combustion engine when the fill state of a fuel tank or a mean or maximum or minimum value of a plurality of tank fill states is greater than a predetermined tank fill state limit value.

2. A method according to claim 1, **characterised in that** at least a further one of the following influencing variables is taken into account for an evaluation of shut-down conditions and/or start-up conditions:
a) the presence or absence of a driver identification transmitter and/or a vehicle key, which may optionally be configured as a radio vehicle key,
b) the current state of a tank ventilation system present in the vehicle, preferably an activated charcoal filter,
c) the current state of a diesel particulate filter present in the vehicle,
d) an activity state of a workshop mode and/or works and/or service and/or production mode,
e) the current ambient temperature outside the vehicle,
f) an evaluation of a driver seat occupation detection device and optionally a passenger seat occupation detection device, the seat occupation detection device being fitted in the form of a seat occupation mat and/or a camera system and/or a belt buckle evaluation system,
g) the detection of a cylinder equalisation process,
h) an activity state of a travelling speed control system,
i) an activity state of a so-called auto-hold function in motor vehicles with automatic transmissions,
j) an activity state of an electric parking brake and/or
k) an activity state of a so-called hill hold function.

3. A method according to claim 2, **characterised in that** a further shut-down condition for automatically shutting down the internal combustion engine and/or a start-up condition for automatically starting up the internal combustion engine is that it is only possible to automatically shut down and/or start up the internal combustion engine when a valid driver identification transmitter and/or vehicle key is currently detected.

4. A method according to either of claims 2 or 3, **characterised in that** when a valid driver identification transmitter and/or vehicle key is not detected, the start-stop device for automatically shutting down and/or starting up the internal combustion engine is deactivated.

5. A method according to any one of claims 2 to 4, **characterised in that** a further shut-down condition for automatically shutting down the internal combustion engine and/or a start-up condition for automatically starting up the internal combustion engine is that it is only possible to automatically shut down and/or start up the internal combustion engine when a tank ventilation system present in the vehicle is in the saturation range.

6. A method according to any one of claims 2 to 4, **characterised in that** a further shut-down condition for automatically shutting down the internal combustion engine and/or a start-up condition for automatically starting up the internal combustion engine is that it is only possible to automatically shut down and/or start up the internal combustion engine when the load on an activated charcoal filter is less than a predetermined load limit value.

7. A method according to any one of claims 2 to 6, **characterised in that** a further shut-down condition for automatically shutting down the internal combustion engine is that it is only possible to automatically shut down the internal combustion engine when the diesel particulate filter is not in a regeneration phase, or a diesel filter load exceeds a predetermined limit value.

8. A method according to any one of claims 2 to 7, **characterised in that** a further shut-down condition for automatically shutting down the internal combustion engine and/or a start-up condition for automatically starting up the internal combustion engine is that it is only possible to automatically shut down and/or start up the internal combustion engine when no active workshop mode and/or works and/or service and/or production mode is detected.

9. A method according to any one of claims 2 to 8, **characterised in that** when the workshop mode and/or works and/or service and/or production mode is active, the start-stop device for automatically shutting down and/or starting up the internal combustion engine is deactivated.

10. A method according to any one of claims 2 to 9, **characterised in that** a further shut-down condition for automatically shutting down the internal combustion engine and/or a start-up condition for automatically starting up the internal combustion engine is that it is only possible to automatically shut down and/or start up the internal combustion engine when the current ambient temperature is greater than a lower temperature limit value and less than an upper temperature limit value.

11. A method according to any one of claims 2 to 10, **characterised in that** a further shut-down condition for automatically shutting down the internal combustion engine and/or a start-up condition for automatically starting up the internal combustion engine is that it is only possible to automatically shut down and/or start up the internal combustion engine when the driver seat occupation detection unit detects an occupied seat.

12. A method according to claim 11, **characterised in that** in the course of the seat occupation detection, the closing state of the driver's door or/and the passenger's door of the motor vehicle is also evaluated.

13. A method according to any one of claims 2 to 12, **characterised in that** a further shut-down condition for automatically shutting down the internal combustion engine is that it is only possible to automatically shut down the internal combustion engine if no cylinder equalisation process is detected.

14. A method according to any one of claims 2 to 13, **characterised in that** a further shut-down condition for automatically shutting down the internal combustion engine and/or a start-up condition for automatically starting up the internal combustion engine is that it is only possible to automatically shut down and/or start up the internal combustion engine when no active driving speed control function is detected.

15. A method according to any one of claims 2 to 14, **characterised in that** a start-up condition for automatically starting up the internal combustion engine is that it is only possible to automatically start up the internal combustion engine when the accelerator pedal is depressed to such an extent when an active auto-hold function is detected that the accelerator pedal position deviates from its base position by more than a predetermined accelerator pedal position threshold value.

16. A method according to any one of claims 2 to 15, **characterised in that** a start-up condition to automatically start up the internal combustion engine in a motor vehicle with automatic transmissions is that it is only possible to automatically start up the internal combustion engine when no auto-hold function is active when the brake is released.

17. A method according to any one of claims 2 to 16, **characterised in that** a start-up condition to automatically start up the internal combustion engine is that it is only possible to automatically start up the internal combustion engine when the accelerator pedal is depressed to such an extent when an active electric parking brake is detected that the accelerator pedal position deviates from its base position by more than a predetermined accelerator pedal position threshold value.

18. A method according to any one of claims 2 to 17, **characterised in that** a start-up condition to automatically start up the internal combustion engine is that it is only possible to automatically start up the internal combustion engine when no active hill hold function is detected.

19. A method according to any one of claims 2 to 18, **characterised in that** a start-up condition to automatically start up the internal combustion engine is that it is only possible to automatically start up the internal combustion engine when the accelerator pedal is depressed to such an extent when an active hill hold function is detected that the accelerator pedal position deviates from its base position by more than a predetermined accelerator pedal position threshold value.

## Revendications

1. Procédé de commande d'un processus automatique de coupure et/ou de mise en marche d'un moteur thermique d'un véhicule automobile par une installation marche/arrêt qui après le démarrage du moteur thermique par une personne et le déplacement du véhicule, coupe automatiquement le moteur thermique à l'arrêt du véhicule si des conditions de coupure prédéfinies sont remplies par des grandeurs d'influence correspondantes et/ou qui met en marche automatiquement le moteur thermique coupé automatiquement si des conditions de mise en marche prédéfinies sont remplies par des grandeurs d'influence correspondantes, et pour l'exploitation des conditions de coupure et/ou des conditions de mise en marche, comme grandeurs d'influence, on tient compte du niveau actuel dans le réservoir de carburant,
procédé **caractérisé en ce qu'**
une condition de coupure pour couper automatiquement le moteur thermique est que la coupure automatique du moteur thermique est seulement possible si le niveau dans le réservoir de carburant ou une valeur moyenne ou maximale ou minimale de plusieurs niveaux de carburant, est supérieure à une valeur limite prédéfinie de niveau de réservoir.

2. Procédé selon la revendication 1,
**caractérisé en ce que**
pour une exploitation des conditions coupure et/ou de mise en marche, on tient compte au moins d'une autre des grandeurs d'influence suivantes :
a) l'existence ou non d'un générateur d'identification de conducteur et/ou d'une clé de véhicule qui peut, le cas échéant être une clé radio,
b) l'état dans lequel se trouve un système de ventilation équipant le réservoir de préférence un filtre à charbon actif,
c) l'état dans lequel se trouve un filtre à particules Diesel équipant le véhicule,
d) un état d'activité d'un mode d'atelier et/ou de service d'entretien ou d'atelier et/ou un mode de fabrication,
e) la température ambiante actuelle à l'extérieur du véhicule,
f) l'exploitation de l'occupation du siège du conducteur et le cas échéant, une installation de détection de l'occupation du siège de passager, l'installation de reconnaissance d'occupation de siège étant réalisée sous la forme d'une nappe d'occupation de siège et/ou d'un système de caméras et/ou d'un système d'exploitation des serrures de ceintures de sécurité,
g) la reconnaissance d'une position d'équilibre des cylindres,
h) un état d'activité d'un système de régulation de vitesse de déplacement,
i) un état d'activité d'une fonction d'automaintien dans le cas de véhicules automobile équipés d'une boîte de vitesses automatique,
j) un état d'activité d'un frein de stationnement électrique et/ou,
k) un état d'activité d'une fonction de retenue en pente.

3. Procédé selon la revendication 2,
**caractérisé en ce qu'**
une autre condition de coupure pour couper automatiquement le moteur thermique et/ou une condition de mise en marche pour mettre en marche automatiquement le moteur thermique, consiste à ne permettre la coupure automatique et/ou la mise en marche du moteur thermique, que si actuellement, un générateur d'identification de conducteur, valable et/ou une clé de véhicule, ont été détectés.

4. Procédé selon l'une des revendications 2 et 3,
**caractérisé en ce qu'**
la non reconnaissance d'un générateur d'identification valable de conducteur et/ou de clé de véhicule, neutralise l'installation marche/arrêt pour couper automatiquement et/ou mettre en marche automatiquement le moteur thermique.

5. Procédé selon l'une des revendications 2-4,
**caractérisé en ce qu'**
une autre condition de coupure pour couper automatiquement le moteur thermique et/ou une condition de mise en marche pour la mise en marche automatique du moteur thermique, consiste à ne permettre une coupure et/ou une mise en marche automatique du moteur thermique, que si un système de ventilation de réservoir équipant le véhicule, est dans sa zone de saturation.

6. Procédé selon l'une des revendications 2-4,
**caractérisé en ce qu'**
une autre condition de coupure pour couper automatiquement le moteur thermique et/ou une condition de mise en marche pour mettre en marche automatiquement le moteur thermique, consiste à ne permettre une coupure et/ou une mise en marche automatique du moteur thermique, que si la charge d'un filtre à charbon actif est inférieure à une valeur limite prédéfinie de charge.

7. Procédé selon l'une des revendications 2-6,
**caractérisé en ce qu'**
une autre condition de coupure pour la coupure automatique du moteur thermique, est que la coupure automatique du moteur thermique n'est possible que si le filtre à particules Diesel n'est pas en phase de régénération ou si la charge du filtre à particules Diesel dépasse une valeur limite prédéfinie.

8. Procédé selon l'une des revendications 2-7,
**caractérisé en ce qu'**
une autre condition de coupure pour couper automatiquement le moteur thermique et/ou une condition de mise en marche pour la mise en marche automatique du moteur thermique, consiste à ne permettre la coupure automatique et/ou la mise en marche automatique du moteur thermique, que si aucun mode actif d'atelier et/ou d'intervention et/ou de service et/ou de mode de fabrication, n'est détecté.

9. Procédé selon l'une des revendications 2-8,
**caractérisé en ce qu'**
en cas de mode actif d'atelier et/ou d'intervention et/ou de service et/ou de mode de fabrication, l'installation marche/arrêt pour la coupure automatique et/ou la mise en marche automatique du moteur thermique, est neutralisée.

10. Procédé selon l'une des revendications 2-9,
**caractérisé en ce qu'**
une autre condition de coupure pour couper automatiquement le moteur thermique et/ou une condition de mise en marche pour mettre en marche automatiquement le moteur thermique, consiste à ne permettre une coupure automatique et/ou une mise en marche automatique du moteur thermique, que si la température ambiante actuelle est supérieure à une valeur limite inférieure de température et inférieure à une valeur limite supérieure de température.

11. Procédé selon l'une des revendications 2-10,
**caractérisé en ce qu'**
une autre condition de coupure pour la coupure automatique du moteur thermique et/ou une condition de mise en marche pour la mise en marche automatique du moteur thermique, consiste à ne permettre une coupure automatique et/ou une mise en marche automatique du moteur thermique, que si l'unité de détection d'occupation du siège de conducteur, détecte un siège occupé.

12. Procédé selon la revendication 11,
**caractérisé en ce que**
dans le cadre de la détection de l'occupation du siège, on exploite en outre l'état de fermeture de la portière du véhicule et/ou de la portière du passager du véhicule.

13. Procédé selon l'une des revendications 2-12,
**caractérisé en ce qu'**
une autre condition de coupure pour couper automatiquement le moteur thermique, consiste à ne permettre une coupure automatique du moteur thermique, que si aucune de position d'équilibre des cylindres n'est détectée.

14. Procédé selon l'une des revendications 2-13,
**caractérisé en ce qu'**
une autre condition de coupure pour la coupure automatique du moteur thermique et/ou une condition de mise en marche pour la mise en marche automatique du moteur thermique, consiste à ne permettre une coupure automatique et/ou une mise en marche automatique du moteur thermique, que si aucune fonction active de régulation de vitesse du véhicule n'est connue.

15. Procédé selon l'une des revendications 2-14,
**caractérisé en ce qu'**
une condition de mise en marche pour la mise en marche automatique du moteur thermique, consiste à ne permettre une mise en marche automatique du moteur thermique, que si lorsqu'une fonction d'automaintien active est reconnue, la pédale d'accélérateur est enfoncée suffisamment pour que la position de la pédale d'accélérateur diffère de sa position de base de plus d'une valeur de seuil prédéfinie de position de pédale d'accélérateur.

16. Procédé selon l'une des revendications 2-15,
**caractérisé en ce qu'**
une condition de mise en marche pour la mise en marche automatique du moteur thermique dans un véhicule automobile équipé d'une boîte de vitesses automatique, consiste à ne permettre la mise en marche automatique du moteur thermique, que si à la libération du frein, aucune fonction d'automaintien n'est activée.

17. Procédé selon l'une des revendications 2-16,
**caractérisé en ce qu'**
une condition de mise en marche pour la mise en marche automatique du moteur thermique, consiste à ne permettre une mise en marche automatique du moteur thermique, que si un frein de stationnement électrique a été détecté comme activé, la pédale d'accélérateur est suffisamment enfoncée pour que la position de la pédale d'accélérateur diffère de sa position de base de plus d'une valeur de seuil prédéfinie de réglage de pédale d'accélérateur.

18. Procédé selon l'une des revendications 2-17,
**caractérisé en ce qu'**
une condition de mise en marche pour la mise en marche automatique du moteur thermique, consiste à ne permettre une mise en marche automatique du moteur thermique, que si aucune fonction active de maintien en pente n'a été détectée.

19. Procédé selon l'une des revendications 2-18,
**caractérisé en ce qu'**
une condition de mise en marche pour la mise en marche automatique du moteur thermique, consiste à ne permettre une mise en marche automatique du moteur thermique, que si une fonction active de maintien en pente ayant été détectée, la pédale d'accélérateur est suffisamment enfoncée pour que la position de la pédale d'accélérateur diffère de sa position de base de plus d'une valeur de seuil prédéfinie de la position de la position de la pédale d'accélérateur.
